# EUROPÄISCHE PATENTSCHRIFT

(11) **EP 0 734 925 B1**
(45) Veröffentlichungstag und Bekanntmachung des Hinweises auf die Patenterteilung: **16.06.1999**
(21) Anmeldenummer: 96101472.7
(22) Anmeldetag: 02.02.1996
(51) Int. Cl.: B60T 7/12

(54) **Entgleisungsdetektor für Schienenfahrzeuge**
Derailment detector for railway vessels
Détecteur de déraillement pour véhicules de rail

(30) Priorität: 27.11.1995 DE 19544122; 27.03.1995 DE 19510483
(43) Veröffentlichungstag der Anmeldung: 02.10.1996
(73) Patentinhaber: KNORR-BREMSE Systeme für Schienenfahrzeuge GmbH, 80809 München (DE); Oerlikon-Knorr Eisenbahntechnik AG, 8155 Niederhasli (CH)
(72) Erfinder: Breinl, Walter, Dr., D-80997 München (DE)

(56) Entgegenhaltungen:
- EP-A- 0 699 567
- DE-A- 1 455 299
- DE-A- 2 555 363
- US-A- 3 288 992
- US-A- 3 938 765

## Beschreibung

Die Erfindung betrifft eine Notbremseinrichtung nach dem Gattungsbegriff des Patentanspruches 1.

Beim Betrieb von Schienenfahrzeugen, insbesondere schweren Güterzügen, kann es vorkommen, daß ein Fahrzeugrad entgleist, ohne daß dies zunächst bemerkt wird. Als Folge davon kann großer Schaden sowohl am Schienenfahrzeug als auch am Gleisaufbau entstehen. Zur Vermeidung derartiger Situationen kommen Entgleisungsdetektoren zur Anwendung, welche automatische Schnellbremsungen ermöglichen, um hierdurch größeren Schaden abzuwenden. Diese Entgleisungsdetektoren können als Lagesensoren ausgebildet sein, welche im Entgleisungsfall mechanisch aus ihrer Ruhelage bewegt werden und in der Folge die Brems- bzw. Hauptluftleitung öffnen, derart, daß bei großquerschnittigem Öffnen eine Schnellbremsung herbeigeführt wird.

Bekannt sind gattungsgemäße Notbremsventile (DE-B-2 555 363), welche über eine Steuerleitung angesteuert werden, z.B. über einen Notbremszugkasten für Mitreisende, und welche die Bremsleitung über einen großen Querschnitt zu entlüften vermögen, wodurch eine schnelle Bremsung für den Zug eingeleitet wird. Es sind auch Entgleisungsdetektoren bekannt (DE-A-1 455 299), bei welchen ein Gewichtskörper als Feder-Masse-Schwinger im Entgleisungsfall derart verlagerbar ist, daß er ein Ventil zum Zwecke der Entlüftung der Hauptluftleitung aufzustoßen vermag.

Davon ausgehend besteht die Aufgabe der Erfindung darin, den Aufbau von Notbremseinrichtungen der gattungsgemäßen Art unter Berücksichtigung von an Schienenfahrzeugen existenten Entgleisungsdetektoren und Notbremsventilen zu vereinfachen. Es soll hierbei möglich sein, derartige Notbremseinrichtungen sowohl für Schienenfahrzeuge des Personenverkehrs als auch für Güterzüge einzusetzen.

Zur Lösung dieser Aufgabe dienen die Merkmale nach dem Kennzeichnungsteil des Patentanspruches 1.

Die Verbindung des Entgleisungsdetektors mit einem Notbremsventil in Form eines Notbremsblocks schafft ein im baulichen Aufwand einfaches Gerät, welches sowohl für die Funktion als reine Notbremsventileinrichtung als auch als Entgleisungs-Ventileinrichtung verwendbar ist. Im besonderen ist es vorteilhaft, daß der Entgleisungsdetektor in den Steuerkreis des Notbremsventils integriert ist, derart, daß der vergleichsweise große Entlüftungsquerschnitt am Notbremsventil in gleicher Weise für den Entgleisungsdetektor zur Verfügung steht. Dieser steuert das Notbremsventils bzw. dessen Steueranschluß auch mit vergleichsweise kleinem Öffnungsquerschnitt an, löst jedoch durch die für die Notbremsventilbetätigung zur Verfügung stehende Anordnung sofort die benötigte Entlüftung der Hauptluftleitung zum Zwecke der Schnellbremsung aus. Der Notbremsblock kann unabhängig von der Existenz oder Betätigung eines Notbremszugkastens zum Einsatz kommen, so vorzugsweise in Güterzügen, und wird bevorzugt in Positionen montiert, in welchen der als Trägheits-Masse wirkende Gewichtskörper des Entgleisungsdetektors ohne Verzögerung anspricht, d.h. im Bereich der Achsen bzw. Schienenfahrzeugräder.

In vorteilhafter Weise kann der Notbremsblock infolge der Feinfühligkeit des Entgleisungsdetektors auch als sogenannter Flachstellendetektor für Schienenfahrzeugräder verwendet werden, d.h. starke Stöße verursachende Flachstellen auf der Lauffläche eines Schienenfahrzeugrades vermögen den Entgleisungsdetektor und über diesen das Notbremsventil auszulösen, derart, daß in gleicher Weise eine Notbremsung eingeleitet werden kann.

Vorteilhafte Ausgestaltungen und Weiterbildungen sind in weiteren Patentansprüchen aufgeführt.

Die Erfindung ist anhand eines Ausführungsbeispieles unter Bezugnahme auf die beigefügte Zeichnung erläutert.
Fig. 1 ist eine Schnittansicht des aus Notbremsventil und Entgleisungsdetektor bestehenden Notbremsblocks;
Fig. 2 ist eine schematische Ansicht des Notbremsblocks in seiner Zuordnung zur Hauptluftleitung und zum Notbremszugkasten.

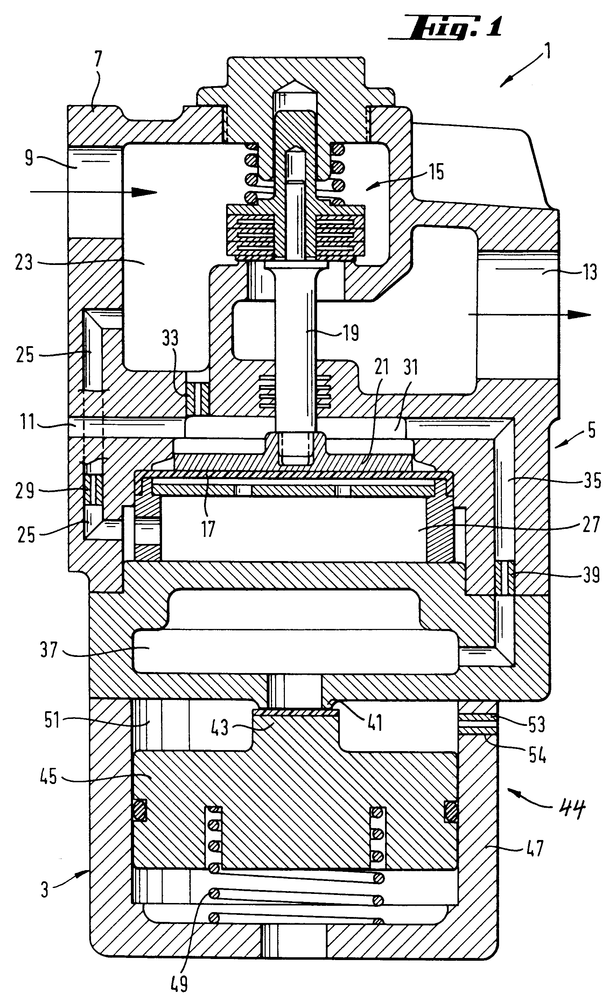

In Fig. 1 der Zeichnung ist ein Notbremsventil 1 dargestellt, welches mit einem Entgleisungsdetektor 3 in einem erfindungsgemäßen Notbremsblock 5 vereint ist. Das Notbremsventil 1 besteht aus einem Gehäuse 7 mit einem Hauptluftleitungsanschluß 9, einem Steueranschluß 11, einem Entlüftungsanschluß 13, einem zwischen Hauptluftleitungsanschluß und Entlüftungsanschluß wirkenden, federverspannten Ventil 15 und einem das Ventil druckabhängig betätigenden, in Wirkverbindung mit einer Membrane 17 stehenden Stößel 19. Der Stößel 19 ist an seinem unteren Ende mit einem Ventilteller 21 verbunden, welcher auf der Membrane 17 aufliegt.

Eine den Hauptluftleitungsdruck des Schienenfahrzeuges führende Kammer 23 im Gehäuse 7 ist mittels einer Leitung 25 an die unterhalb der Membrane 17 bestehende Kammer 27 angeschlossen; in der Leitung 25 ist eine Düse 29 vorgesehen. Die mit dem Steueranschluß 11 verbundene Kammer 31 oberhalb des Ventiltellers 21 ist über eine Düse 33 an die Kammer 23 angeschlossen. Die Kammer 31 ist fernerhin über einen Kanal 35 mit einer Kammer 37 verbunden, wobei in der Verbindung vorzugsweise eine Düse 39 vorgesehen ist. Die Kammer 37 ist an ihrer gemäß Darstellung unteren Seite mit einem Ventilsitz 41 versehen, gegenüber welchem ein als Ventilkörper 43 ausgebildeter Fortsatz eines einen Auslösemechanismus 44 bildenden Gewichtskörpers 45 wirkt.

Der in an sich bekannter Weise als Schocksensor wirkende Gewichtskörper 45 ist an seinem Außenumfang gegenüber dem ihn aufnehmenden Gehäuse 47 abgedichtet und ist mittels einer Feder 49 in Richtung des Ventilsitzes 41 verspannt. Der an der Unterseite des Gewichtskörpers 45 bestehende Raum ist mit Außenluft in Verbindung, desgleichen die oberhalb des Gewichtskörpers 45 bestehende Kammer 51, welche über einen eine Düse 53 aufweisenden Auslaß 54 mit Außenluft in Verbindung steht. Der nach dem Trägheitsprinzip wirkende Gewichtskörper 45 bildet in seiner nachfolgend beschriebenen funktionellen Zuordnung zu der den Steuerdruck führenden Kammer 37 den Entgleisungsdetektor 3, welcher dem in der Darstellung darüber befindlichen Notbremsventil in Form des Notbremsblocks 5 zugeordnet ist.

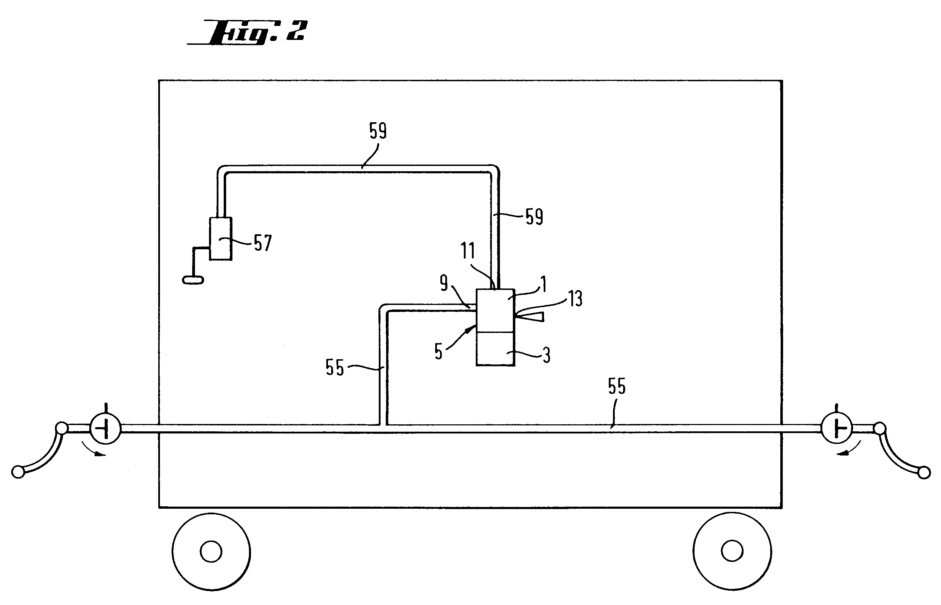

In Fig. 2 der Zeichnung ist schematisch die Zuordnung des Notbremsblocks 5 zur Hauptluftleitung 55 und zu einem Notbremszugkasten 57 innerhalb eines Schienenfahrzeugs dargestellt. Es können mehrere derartige Notbremsblöcke 5 im Schienenfahrzeug vorgesehen sein; um die Wirkung des Entgleisungsdetektors 3 bei Entgleisen eines Schienenfahrzeugrades zu gewährleisten, ist der Notbremsblock 5 vorzugsweise einem Bereich des Schienenfahrzeuges anzuordnen, in welchem ein gutes Ansprechen des Systems aus Gewichtskörper 45 und Feder 49 gewährleistet ist. Der Notbremsblock kann z.B. unmittelbar über der Achse bzw. jeweils über einem Rad des Schienenfahrzeuges vorgesehen sein.

Die Funktion des aus Notbremsventil und Entgleisungsdetektor bestehenden Notbremsblockes 5 ist wie folgt:

Beim Auffüllen der Hauptluftleitung 55 wird das Notbremsventil über den Hauptleitungsanschluß 9 mit Druckluft beaufschlagt, d.h. durch die Düse 33 erhalten die Kammer 31 und der Steueranschluß 11 Druckluft. In gleicher Weise steht über den Steueranschluß 11 Druckluft für die Steuerleitung 59 und den Notbremszugkasten 57 an. Da die Kammer 31 durch den Kanal 35 und die Düse 39 mit der Kammer 37 verbunden ist, steht in der Kammer 37 in gleicher Weise Steuerleitungsdruck an. Mittels der Verbindung durch die Leitung 25 und die Düse 29 gelangt Luft aus der Hauptluftleitung auch in die Kammer 27.

Nach dem Auffüllen der Kammern 27, 31 und 37 ist der Notbremsblock betriebsbereit. Bei einer normalen Notbremsbetätigung mit Hilfe des Notbremszugkastens 57 wird die Steuerleitung 59 entlüftet, d.h. der Druck wird in der Steuerleitung schlagartig abgesenkt. Dadurch entsteht zwischen der Kammer 31 und der Kammer 27 ein Differenzdruck, welcher die Membrane 17 und den Ventilteller 21 mit Stößel 19 nach oben drückt, derart, daß das Ventil 15 großquerschnittig geöffnet wird. Der Hauptluftleitungsdruck entweicht über das Ventil 15 in Richtung des Entlüftungsanschlusses 13. Die Notbremsung wird hierdurch eingeleitet, wie bekannt.

Die vorstehend erläuterte Funktion des Notbremsventils ist auch durch den Entgleisungsdetektor 3 auslösbar. Wenn bei einem Rad- oder Achsenbruch infolge der hierbei auftretenden Beschleunigungen eine nach unten gerichtete Versetzung des Gewichtskörpers 45 stattfindet, und zwar gegen die Kraft der Feder 49, dann hebt sich der Ventilkörper 43 vom Ventilsitz 41 ab, derart, daß die Kammer 37 gesteuert über die Düse 53 im Auslaß 54 entlüftet wird.

Der Druckabbau pflanzt sich durch den Kanal 35 in Richtung des Steueranschlusses 11 fort, so daß wiederum ein Differenzdruck zwischen dem Druck in der Kammer 27 und dem Druck in der Kammer 31 entsteht. Als Folge wird das Ventil 15 in der vorstehend genannten Weise geöffnet und die Hauptluftleitung wird zum Zwecke einer Notbremsung entlüftet.

Die Kombination des Notbremsventils mit dem Entgleisungsdetektor in Form eines Notbremsblockes ist als baulich sehr vorteilhafte Lösung anzusehen, da der Entgleisungsdetektor unter Verwendung der dem Notbremsventil zugeordneten Ventilbauteile zur Entlüftung der Hauptluftleitung verwendbar ist. Das Reaktionsvermögen des Entgleisungsdetektors ist durch die Masse des Gewichtkörpers 45 und dessen Federverspannung, durch den Querschnitt am Ventilsitz 41, durch den durch die Düse 39 bestimmbaren Querschnitt des Kanals 35 und durch den Auslaßquerschnitt am Auslaß 54 zur Atmosphäre bestimmt.

Grundsätzlich kann der im Entgleisungsdetektor 3 verwendete, auf Entgleisung, auf Achsen- oder Radbruch ansprechende Mechanismus auch von anderer Art sein; es könnte auch ein durch Erschütterung den Ventilsitz 41 freigebender Ventilmechanismus vorgesehen sein, welcher bei Überwindung einer vorherbestimmbaren Federkraft in eine Öffnungsposition verlagerbar ist, aus welcher er nicht selbsttätig zurückkehrt, sondern durch Rückstellmittel in seine Verschlußlage zurückzubringen ist.

Der Notbremsblock kann in vorteilhafter Weise auch als Vorrichtung zur Flachstellenanzeige, also in Form eines Flachstellendetektors für Schienenfahrzeugräder verwendet werden. An der Lauffläche von Schienenfahrzeugrädern befindliche, im wesentlichen durch überstarke Bremsungen hervorgerufene Flachstellen führen zu einem starken Schlagen der Räder, welches sich auf die Achsen und den gesamten Aufbau des Schienenfahrzeuges überträgt. Als Folge derartiger Flachstellen und der durch diese ausgelösten Stöße kann es zu sogenannten Heißläufern und/oder zum Lagerbruch kommen. Der Entgleisungsdetektor 3 spricht auf Flachstellen von z.B. einem Grenzwert von 4mm und darüber an, d.h. die durch die Flachstellen ausgelösten Stöße haben dieselbe Auslösefunktion wie die bei Entgleisungen verursachten Stöße, derart, daß Notbremsungen der vorgenannten Art eingeleitet werden. Um ein wirksames Ansprechen zu erreichen, kann es zweckmäßig sein, Notbremsblöcke der zusätzlich als Flachstellendetektor vorgesehenen Art unmittelbar im Bereich von Achslagern anzuordnen, um eine Übertragung der Stöße auf den Entgleisungsdetektor zu optimieren. Der Entgleisungsdektektor kann im übrigen hinsichtlich seiner funktionswesentlichen Bauteile so optimierbar sein, daß er auf Flachstellen-Stöße verschiedener Größe anspricht, also bereits auf Flachstellen mit weniger als z.B. 4mm Tiefe.

Der Notbremsblock 5 kann je nach Einsatzfall lediglich als Notbremsventil oder Entgleisungsdetektor verwendet werden; dies ist durch wahlweises Schließen des Auslasses 54 oder des Steueranschlusses 11 möglich. Durch Schließen des Steueranschlusses, z. B. bei Einsatz in einem Güterzug, kommt dem Notbremsblock ausschließlich die Funktion eines Entgleisungsdetektors zu.

### Bezugszeichenliste

- 1: Notbremsventil
- 3: Entgleisungsdetektor
- 5: Notbremsblock
- 7: Gehäuse
- 9: Hauptluftleitungsanschluß
- 11: Steueranschluß
- 13: Entlüftungsanschluß
- 15: Ventil
- 17: Membrane
- 19: Stößel
- 21: Ventilteller
- 23: Kammer
- 25: Leitung
- 27: Kammer
- 29: Düse
- 31: Kammer
- 33: Düse
- 35: Kanal
- 37: Kammer
- 39: Düse
- 41: Ventilsitz
- 43: Ventilkörper
- 44: Auslösemechanismus
- 45: Gewichtskörper
- 47: Gehäuse
- 49: Feder
- 51: Kammer
- 53: Düse
- 54: Auslaß
- 55: Hauptluftleitung
- 57: Notbremszugkasten
- 59: Steuerleitung

## Patentansprüche

1. Notbremseinrichtung zur Auslösung der Druckluftbremsen von Schienenfahrzeugen, umfassend ein an die Hauptluftleitung (55) des Schienenfahrzeuges anschließbares Notbremsventil (1), wobei das Notbremsventil (1) über einen Steueranschluß (11) zwecks manueller Auslösung einer Notbremsung an einen Notbremszugkasten (57) anschließbar ist, **dadurch gekennzeichnet**, daß das Notbremsventil (1) mit einem Entgleisungsdetektor (3) in einem gemeinsamen Gehäuse als Notbremsblock (5) vereint ist, wobei der Entgleisungsdetektor (3) einen Auslösemechanismus (44) aufweist, welcher mit dem Notbremsventil (1) derart in Verbindung steht, daß im Entgleisungsfall über das Notbremsventil (1) die Hauptluftleitung (55) des Schienenfahrzeuges großquerschnittig entlüftet wird.

2. Notbremseinrichtung nach Anspruch 1, **gekennzeichnet durch** folgende Merkmale:
a) der Auslösemechanismus (44) des Entgleisungsdetektors (3) wirkt gegenüber einem Ventil (41, 43), welches in Ruhelage die Verbindung zwischen einer den Steuerleitungsdruck des Notbremsventils (1) führenden Kammer (37) und einem Auslaß (54) zur Außenluft sperrt; und
b) die den Steuerleitungsdruck des Notbremsventils (1) führende Kammer (37) ist mittels eines Kanals (35) an den Steueranschluß (11) des Notbremsventils (1) angeschlossen, derart, daß Druckabsenkungen in dieser Kammer (37) Notbremsbetätigungen im Notbremsventil (1) zum Zwecke großquerschnittiger Entlüftung der Hauptluftleitung (55) des Schienenfahrzeuges auslösen.

3. Notbremseinrichtung nach Anspruch 1 oder 2, **dadurch gekennzeichnet**, daß der Auslösemechanismus (44) aus einem als Schocksensor wirkenden Gewichtskörper (45) besteht, welcher einen Fortsatz in Form eines Ventilkörpers (43) aufweist und durch eine Feder (49) in Richtung eines Ventilsitzes (41) in der Verbindung zwischen der den Steuerleitungsdruck des Notbremsventils (1) führenden Kammer (37) und dem Auslaß (54) zur Außenluft verspannt ist.

4. Notbremseinrichtung nach Anspruch 2, **dadurch gekennzeichnet**, daß sich im Kanal (35) zwischen dem Steueranschluß (11) und der den Steuerleitungsdruck den Notbremsventils (1) führenden Kammer (37) eine Düse (39) befindet.

5. Notbremseinrichtung nach Anspruch 2, **dadurch gekennzeichnet**, daß sich im Auslaß (54) zur Außenluft eine Düse (53) befindet.

6. Verwendung der Notbremseinrichtung nach einem der vorangehenden Ansprüche, als Flachstellendetektor für Schienenfahrzeugräder.

## Claims

1. Emergency brake device for releasing the air brake systems in rail vehicles, comprising an emergency brake valve (1) adapted for being connected to the brake pipe (55) of the rail vehicle, which emergency brake valve (1) is adapted to be connected via a control connector (11) to an alarm signal box (57) for manual emergency brake application, **characterised in** that said emergency brake valve (1) is combined with a derailing detector (3) in a common housing as an emergency brake block (5), with said derailing detector (3) including a releasing mechanism (44) which is connected to said emergency brake valve (1) in such a way that in the event of derailing said brake pipe (55) of the rail vehicle will be vented via said emergency brake valve (1) over a large cross-sectional area.

2. Emergency brake device according to Claim 1, **characterised by** the following features:
(a) said releasing mechanism (44) of said derailing detector (3) is operative relative to a valve (41, 43) which, in the rest position, blocks the connection between a chamber (37) carrying the control pipe pressure of said emergency brake valve (1) and an outlet (54) to the outside air; and
(b) said chamber (37) carrying the control pipe pressure of said emergency brake valve (1) is connected, by means of a passage (35), to the control connector (11) of said emergency brake valve (1) such that reductions in the pressure in this chamber (37) trigger emergency brake applications in said emergency brake valve (1) for the purpose of venting said brake pipe (55) of the rail vehicle over a large cross-sectional area.

3. Emergency brake device according to Claim 1 or 2, **characterised in** that said releasing mechanism (44) consists of a weight body (45) acting as a shock sensor and presenting an extension in the form of a valve body (43), which is biased by means of a spring (49) in a direction towards a valve seat (41) in the connection between said chamber (37) carrying the control pipe pressure of said emergency brake valve (1) and said outlet (54) to the outside air.

4. Emergency brake device according to Claim 2, **characterised in** that in the passage (35) between said control connector (11) and said chamber (37) carrying the control pipe pressure of said emergency brake valve (1) a nozzle (39) is provided.

5. Emergency brake device according to Claim 2, **characterised in** that a nozzle (53) is disposed in said outlet (54) to the outside air.

6. Application of the emergency brake device according to any of the preceding claims as wheel flat detector for rail vehicle wheels.

## Revendications

1. Dispositif de freinage d'urgence destiné à déclencher les freins pneumatiques de véhicules sur rails, comprenant une soupape de freinage d'urgence (1) pouvant être raccordée à la conduite d'air principale (55) du véhicule sur rails, la soupape de freinage d'urgence (1) étant susceptible d'être raccordée à un boîtier à tirette de freinage d'urgence (57), par l'intermédiaire d'un raccord de commande (11), en vue du déclenchement manuel d'un freinage d'urgence, caractérisé en ce que la soupape de freinage d'urgence (1) est réunie avec un détecteur de déraillement (3) dans un carter commun en formant un bloc de freinage d'urgence (5), le détecteur de déraillement (3) comportant un mécanisme de déclenchement (44) qui est relié à la soupape de freinage d'urgence (1) de façon telle, qu'en cas de déraillement, la conduite d'air principale (55) du véhicule sur rails soit purgée par une grande section transversale au travers de la soupape de freinage d'urgence.

2. Dispositif de freinage d'urgence selon la revendication 1, caractérisé par les particularités suivantes :
a) le mécanisme de déclenchement (44) du détecteur de déraillement (3) agit par rapport à une soupape (41, 43) qui, en position de repos, bloque la liaison entre une chambre (37) véhiculant la pression de la conduite de commande de la soupape de freinage d'urgence (1) et une sortie (54) menant à l'atmosphère ; et
b) la chambre (37) véhiculant la pression de la conduite de commande de la soupape de freinage d'urgence (1) est raccordée, au moyen d'un canal (35), au raccord de commande (11) de la soupape de freinage d'urgence (1) de façon telle, que des chutes de pression dans cette chambre (37) déclenchent des actionnements pour le freinage d'urgence dans la soupape de freinage d'urgence (1) en vue d'une purge, par une grande section transversale, de la conduite d'air principale (55) du véhicule sur rails.

3. Dispositif de freinage d'urgence selon la revendication 1 ou 2, caractérisé en ce que le mécanisme de déclenchement (44) est constitué d'un corps formant masselotte (45) qui agit en tant que capteur de choc, lequel corps comporte un prolongement formant un corps d'obturation de soupape (43) et est pressé par un ressort (49) en direction d'un siège de soupape (41) dans la liaison entre la chambre (37) véhiculant la pression de la conduite de commande de la soupape de freinage d'urgence (1) et la sortie (54) menant à l'atmosphère.

4. Dispositif de freinage d'urgence selon la revendication 2, caractérisé en ce que dans le canal (35) entre le raccord de commande (11) et la chambre (37) véhiculant la pression de la conduite de commande de la soupape de freinage d'urgence (1), se trouve un ajutage (39).

5. Dispositif de freinage d'urgence selon la revendication 2, caractérisé en ce que dans la sortie (54) menant à l'atmosphère, se trouve un ajutage (53).

6. Utilisation du dispositif de freinage d'urgence selon l'une des revendications précédentes en tant que détecteur de plat de roue pour des roues de véhicules sur rails.
